Europäisches Patentamt

European Patent Office

Office européen des brevets

(19)

(11) Veröffentlichungsnummer: **0 037 055 B1**

(12) **EUROPÄISCHE PATENTSCHRIFT**

(45) Veröffentlichungstag der Patentschrift:
29.06.83

(51) Int. Cl.³: **C 08 L 93/04, D 21 H 3/34**

(21) Anmeldenummer: **81102191.4**

(22) Anmeldetag: **24.03.81**

(54) **Hydrophobierungsmittel für cellulosehaltige Flächengebilde, Verfahren zu seiner Herstellung und seine Verwendung.**

(30) Priorität: **31.03.80 DE 3012503**

(43) Veröffentlichungstag der Anmeldung:
**07.10.81 Patentblatt 81/40**

(45) Bekanntmachung des Hinweises auf die Patenterteilung:
**29.06.83 Patentblatt 83/26**

(84) Benannte Vertragsstaaten:
**AT BE CH DE FR GB IT LI LU NL SE**

(56) Entgegenhaltungen:
**DE-B-1 290 649**
**US-A-4 022 634**

(73) Patentinhaber: **Klebstoffwerke Collodin Dr.Schultz & Nauth GmbH, Vilbeler Landstrasse 20, D-6000 Frankfurt 61 (Fechenheim) (DE)**

(72) Erfinder: **Schultz, Wolf-Stefan, Dr.-Ing., Dieburger Strasse 21, D-6000 Frankfurt 61 (DE)**

(74) Vertreter: **Beil, Walter, Dr. et al, BEIL, WOLFF & BEIL Rechtsanwälte Adelonstrasse 58, D-6230 Frankfurt am Main 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Hydrophobierungsmittel für cellulosehaltige Flächengebilde,
Verfahren zu seiner Herstellung und seine Verwendung

Die Erfindung betrifft ein Hydrophobierungsmittel für cellulosehaltige Flächengebilde, das

(a) eine wässrige Dispersion oder Lösung mindestens eines mit einer carboxylgruppenhaltigen dienophilen Verbindung modifizierten Kolophoniumharzes und/oder eines nicht modifizierten und/oder eines hydrierten und/oder eines disproportionierten Kolophoniumharzes,

(b) eine wässrige Lösung eines Hilfsmittels aus 10 bis 90 Gew.-% Maleinsäureanhydrid, Maleinsäure, Fumarsäure oder Acrylsäure und 90 bis 10 Gew.-% Harnstoff, das mit einer Base neutralisiert sein kann, und

(c) gegebenenfalls übliche Streckmittel, Zuschlagstoffe, Stabilisatoren und/oder Fixiermittel enthält, ein Verfahren zur Herstellung dieses Hydrophobierungsmittels und seine Verwendung zur Hydrophobierung cellulosehaltiger Flächengebilde, insbesondere zur Masse- und Oberflächenleimung von Papier.

Bisher wurden zur Masseleimung und Hydrophobierung von Papier und anderen cellulosehaltigen Flächengebilden in erster Linie Kolophonium und modifiziertes bzw. verstärktes Kolophonium verwendet. Die Verstärkung von Kolophonium durch Umsetzen mit Maleinsäureanhydrid oder anderen dienophilen Verbindungen unter Erhöhung der Zahl der Carboxylgruppen im Kolophonium wurde z.B. von Casey in Pulp and Paper, 2. Auflage, Bd. II, Seiten 1043 bis 1066 und in den US-PSn 2 628 918 und 2 684 300 beschrieben. Ein typisches verstärktes Kolophoniumharz sollte etwa 1 bis 30 Gew.-% Maleinsäureanhydrid, bezogen auf das Harz, in gebundener Form als Addukt (Maleinoprimarsäureanhydrid) enthalten.

Der seit 1806 in Form seiner verschiedenen Anwendungsmöglichkeiten als flüssige Seife, Trockenleim oder Dispersion angewendete Kolophoniumharzleim hatte jedoch den Nachteil, dass zu seiner Fixierung auf der Cellulosefaser bzw. Papierfaser anorganische Salze, wie Aluminiumsulfat, erforderlich waren, die einen pH-Wert von 4,5 erforderten. Dieser saure pH-Wert führte zu starker Korrosion an den Aggregaten der Papiermaschine und machte das Papier alterungsunbeständig.

Der Erfindung liegt die Aufgabe zugrunde, ein Hydrophobierungsmittel für cellulosehaltige Flächengebilde, insbesondere einen Papierleim, auf der Grundlage eines Kolophoniumharzes, sei es modifiziert oder nicht modifiziert, hydriert oder disproportioniert, bereitzustellen, das nicht von einer Verwendung im sauren pH-Bereich abhängig ist und sowohl zur Massehydrophobierung (Innenleimung) als auch zur Oberflächenhydrophobierung eingesetzt werden kann.

Diese Aufgabe wird erfindungsgemäss dadurch gelöst, dass das Hydrophobierungsmittel eine wässrige Lösung eines Hilfsmittels aus 10 bis 90 Gew.-% Maleinsäureanhydrid, Maleinsäure, Fumarsäure oder Acrylsäure und 90 bis 10 Gew.-% Harnstoff, das mit einer Base neutralisiert sein kann, enthält.

Durch den Gehalt des erfindungsgemässen Hydrophobierungsmittels an dem Hilfsmittel (b) wird die Anwendung des Hydrophobierungsmittels in der Masse bei neutralem pH-Wert ermöglicht, werden somit die Korrosionsprobleme auf ein Minimum reduziert und ist die Verwendung von Aluminiumsulfat oder einem anderen Aluminiumsalz nicht mehr erforderlich. Darüberhinaus kann das erfindungsgemässe Hydrophobierungsmittel nicht nur zur Hydrophobierung in der Masse, sondern auch zur Oberflächenhydrophobierung papierartiger Flächengebilde mit Hilfe üblicher Vorrichtungen, z.B. Leimpresse oder Sprührohr, angewendet werden.

Das im erfindungsgemässen Hydrophobierungsmittel eingesetzte Kolophoniumharz kann jede der im Handel erhältlichen Arten von Kolophonium sein, z.B. Wurzelharz, Balsamharz, Tallölharz und Gemische von zwei oder mehreren dieser Harze im Roh- oder raffinierten Zustand. Harze mit einer Kristallisationstendenz können bei erhöhten Temperaturen mit Formaldehyd oder Paraformaldehyd in Gegenwart eines sauren Katalysators, z.B. p-Toluolsulfonsäure, in bekannter Weise behandelt werden. So kann mit Formaldehyd behandeltes Harz verwendet werden und fällt unter den hier verwendeten Ausdruck «Kolophoniumharz».

Als modifiziertes oder verstärktes Kolophoniumharz wird ein Reaktionsprodukt von Kolophonium mit einer sauren, dienophilen Verbindung, die den Rest $-\overset{|}{C}=\overset{|}{C}-\overset{|}{C}=O$ enthält, verwendet, das durch Umsetzen von Kolophonium mit der dienophilen Verbindung bei erhöhten Temperaturen, gewöhnlich etwa 150 bis 210 °C, als Addukt erhalten wird. Die eingesetzte Menge der dienophilen Verbindung wird so eingestellt, dass ein modifiziertes Kolophoniumharz mit einem Gehalt von 1 bis 30 Gew.-%, bevorzugt 5 bis 12 Gew.-%, der addierten dienophilen Verbindung, bezogen auf das Gewicht des verstärkten Kolophoniumharzes, erhalten wird. Verfahren zur Herstellung verstärkter Kolophoniumharze sind in den US-PSn 2 628 918 und 2 684 300 beschrieben.

Beispiele für dienophile, den Rest $-\overset{|}{C}=\overset{|}{C}-\overset{|}{C}=O$ enthaltende Verbindungen, die zur Herstellung des verstärkten Kolophoniumharzes verwendet werden können, sind die $\alpha,\beta$-ungesättigten organischen Säuren und ihre zugänglichen Anhydride; spezielle Beispiele hierfür sind Maleinsäureanhydrid, Fumarsäure, Acrylsäure, Maleinsäure, Itaconsäure, Itaconsäureanhydrid, Citraconsäure und Citraconsäureanhydrid. Das bevorzugte Modifizierungsmittel ist Maleinsäureanhydrid. Gegebenenfalls können zur Herstellung des modifizierten Kolophoniumharzes Säuregemische eingesetzt werden.

Auch können Gemische verschiedener verstärkter Kolophoniumharze verwendet werden. So kann z.B. ein Gemisch des Maleinsäureanhydridadduktes an Kolophonium oder des Acrylsäureaddukts an Kolophonium und des Fumarsäureadduktes an Kolophonium zur Herstellung der erfindungsgemässen Hydrophobierungsmittel verwendet werden.

Zur Herstellung der erfindungsgemässen Hydrophobierungsmittel können auch Gemische von modifiziertem und nicht modifiziertem, hydriertem oder disproportioniertem Kolophoniumharz verwendet werden. Derartige Gemische aus modifiziertem und nicht modifiziertem, hydriertem oder disproportioniertem Kolophoniumharz enthalten 50 bis 100% modifiziertes Harz und 50 bis 0% nicht modifiziertes, hydriertes oder disproportioniertes Harz.

Wird ein Kolophoniumharzgemisch eingesetzt, so kann dieses Gemisch jedes der vorstehend aufgeführten Kolophoniumharze, modifizierte und nicht modifizierte, gegebenenfalls auch teilweise oder praktisch vollständig hydriert oder disproportioniert oder auch polymerisiert, enthalten.

Das im erfindungsgemässen Hydrophobierungsmittel in Form einer wässrigen Lösung enthaltene Hilfsmittel besteht aus 10 bis 90 Gew.-% Maleinsäureanhydrid, Maleinsäure, Fumarsäure oder Acrylsäure und 90 bis 10 Gew.-% Harnstoff. Das Hilfsmittel kann mit einer Base, wie z.B. Ammoniak, Kaliumhydroxid oder Natriumhydroxid, neutralisiert sein. Es besteht vorzugsweise aus Maleinsäureanhydrid und Harnstoff. Gemäss einer bevorzugten Ausführungsform besteht das Hilfsmittel aus 50 Gewichtsteilen Maleinsäureanhydrid, 20 bis 50 Gewichtsteilen Harnstoff und 70 bis 100 Gewichtsteilen Wasser.

Das Hydrophobierungsmittel kann gegebenenfalls bekannte Zuschlagstoffe, z.B. Wachse, insbesondere Paraffinwachs und mikrokristallines Wachs, Kohlenwasserstoffharze einschliesslich der von Erdölkohlenwasserstoffen und Terpenen abgeleiteten, Spindelöle oder Polyglykole, enthalten. Diese können in Mengen bis zu etwa 100 Gew.-%, vorzugsweise etwa 30 bis 50 Gew.-% Zuschlagstoffe, bezogen auf das Gewicht des Kolophoniumharzes, zugemischt werden. Es kann auch ein Streckmittel zugesetzt werden. Als Streckmittel, die in Mengen von etwa 30 bis 50 Gew.-%, bezogen auf das Gewicht des Kolophoniumharzes, eingesetzt werden können, kommen z.B. Tallölderivate infrage.

Das erfindungsgemässe Hydrophobierungsmittel kann weiterhin Stabilisatoren, wie z.B. Isopropanol, Methanol, Ethanol, Glyzerin, Glykol oder Polyglykole enthalten. Diese Stabilisatoren können in Mengen bis zu 5%, bezogen auf das fertige Hydrophobierungsmittel, zugesetzt werden. Weiterhin kann das erfindungsgemässe Hydrophobierungsmittel ein kationisches Fixiermittel bzw. Retentionsmittel enthalten. Ein solches Fixiermittel kann insbesondere dann zugesetzt werden, wenn das Hydrophobierungsmittel zur Masseleimung eingesetzt werden soll. Beispiele für derartige Fixiermittel sind Polyethylenderivate. Das Fixiermittel kann in Mengen bis 1%, bezogen auf das fertige Hydrophobierungsmittel, zugesetzt werden.

Zur Herstellung des erfindungsgemässen Hydrophobierungsmittels wird die wässrige Dispersion oder Lösung (a) des Kolophoniumharzes mit der wässrigen Lösung (b) des Hilfsmittels und gegebenenfalls üblichen Streckmitteln, Zuschlagstoffen, Stabilisatoren und/oder Fixiermittel (c) vermischt. Die Bestandteile können in konzentrierter Form, d.h. mit Feststoffkonzentrationen von 40 bis 50%, miteinander vermischt werden. Man kann aber auch zunächst die einzelnen Bestandteile verdünnen und dann das Gemisch herstellen. Das Hydrophobierungsmittel kann eine Feststoffkonzentration von 5 bis 70% aufweisen. Vorzugsweise besitzt das Hydrophobierungsmittel eine Feststoffkonzentration von 40 bis 50% und wird erst kurz vor der Anwendung weiter verdünnt. In jedem Fall, also auch dann, wenn das konzentrierte Hydrophobierungsmittel in Form einer Lösung vorliegt, stellt das verdünnte Hydrophobierungsmittel eine Dispersion dar. Das Verhältnis von Kolophoniumharz (a) zum Hilfsmittel (b) im erfindungsgemässen Hydrophobierungsmittel beträgt 1:1 bis 1:2, insbesondere 1:1.

Die erfindungsgemässen Hydrophobierungsmittel sind bei ihrer Verwendung zur Hydrophobierung cellulosehaltiger Flächengebilde besonders vorteilhaft, weil sie nicht von einer Verwendung im sauren pH-Bereich abhängig sind, weil sie sich mit Wasser auf jeden gewünschten Prozentsatz verdünnen und darüberhinaus auch mit anderen üblichen Mitteln zur Papierbeschichtung, wie z.B. aufgeschlossene Stärke und Stärkederivate, beispielsweise Kato-Stärke, kombinieren lassen und weil sie einerseits wie normale Masseharzleimungsmittel und andererseits als Oberflächenleimungsmittel eingesetzt werden können.

Die Anwendung zur Oberflächenhydrophobierung von Papier und anderen cellulosehaltigen Flächengebilden, wobei unter Cellulose auch Baumwoll- und Regeneratfasern zu verstehen sind, z.B. Vliesstüchern, ist besonders vorteilhaft, weil bei dieser Anwendung niedrige Verdünnungen ausgezeichnete Leimungsergebnisse liefern, wobei sich die Leimwirkung unmittelbar nach der Trocknung entfaltet. Die erreichten Tintenschwimmdauern (vgl. Merkblatt V/15/60 des Vereins der Zellstoff- und Papier-Chemiker und -Ingenieure) von 5 bis 6 Stunden sind vergleichbar mit denen der bekannten Leimungsmittel auf Ketendimerbasis, die aber den Nachteil haben, dass sich bei ihnen die Leimwirkung nicht sofort entfaltet. Darüberhinaus sind die bekannten Leimungsmittel auf Ketendimerbasis verhältnismässig schwerer erhältlich und somit wesentlich teurer als die erfindungsgemässen Hydrophobierungsmittel. Dieser Preisvorteil gilt ganz allgemein gegenüber bekannten Leimungsmitteln auf Kunstharzbasis.

Die folgenden Beispiele erläutern die Erfindung:

Beispiele 1 bis 6

Es wurden zunächst Hilfsmittel der in der nachstehenden Tabelle I aufgeführten Zusammenset-

zungen durch Auflösen von jeweils 50 Gewichtsteilen Maleinsäureanhydrid und 15 bis 60 Gewichtsteilen Harnstoff in Wasser unter Erwärmen hergestellt, wobei jeweils eine 50%ige Lösung erhalten wurde, die wahlweise mit etwa 65 bis 71 Gewichtsteilen an konzentriertem wässrigen Ammoniak neutralisert wurde

Die verschiedenen Hilfsmittel wurden sodann jeweils mit einer gleichen Gewichtsmenge einer 50%igen Lösung eines mit 10% Maleinsäureanhydrid verstärkten Kolophoniumharzleimes und einem Polyethyleniminderivat (Handelsprodukt «Polymin» der BASF) als Fixiermittel in einer Menge von 1%, bezogen auf das verstärkte Kolophonium, versetzt.

Die so erhaltenen Hydrophobierungsmittel wurden verdünnt und zur Masseleimung eines ungeleimten Zellstoffpapiers (erhalten auf dem Blattbildner der Firma Frank, Weinheim) ohne Zusatz von Aluminiumsulfat verwendet. Dabei wurde das Hydrophobierungsmittel dem Zellstoff in solcher Menge zugesetzt, dass die Menge des Hilfsmittels absolut trocken, bezogen auf Zellstoff, 2% bzw. 1,55% bei einem neutralisierten Hilfsmittel und die Menge des Harzleims absolut trocken, bezogen auf Zellstoff, 2% betrug. In jedem Fall wurden der pH-Wert bei der Blattbildung und die Tintenschwimmdauer bestimmt. Die Ergebnisse der Versuche sind in Tabelle I aufgeführt.

Tabelle I

| Beispiel Nr. | 1 | 2 | 3 | 4 | 5 | 6 |
|---|---|---|---|---|---|---|
| Maleinssäureanhydrid, Gew.-Teile | 50 | 50 | 50 | 50 | 50 | 50 |
| Harnstoff, Gew.-Teile | 15 | 15 | 30 | 30 | 60 | 60 |
| Wasser, Gew.-Teile | 65 | 65 | 80 | 80 | 110 | 110 |
| Ammoniak, Gew.-Teile | – | 71,1 | – | 70,1 | – | 65,3 |
| pH-Wert bei Blattbildung | 6,1 | 8,6 | 6,7 | 8,0 | 6,7 | 7,8 |
| Tintenschwimmdauer | 2' | 60'' | 1'30'' | 30'' | 2'30'' | 60'' |

Beispiele 7 bis 9

Die Arbeitsweise der Beispiele 1 bis 6 wurde wiederholt, wobei jedoch in den Hilfsmitteln anstelle von Maleinsäureanhydrid Fumarsäure bzw. Acrylsäure eingesetzt wurden. Die Zusammensetzung der Hilfsmittel sowie die entsprechenden Versuchsergebnisse für eine Anwendung der entsprechenden Hydrophobierungsmittel zur Masseleimung eines Zellstoffpapiers sind in der nachstehenden Tabelle II zusammengestellt:

Tabelle II

| Beispiel Nr. | 7 | 8 | 9 |
|---|---|---|---|
| Fumarsäure, Gew.-Teile | 50 | — | — |
| Acrylsäure, Gew.-Teile | – | 36 | 36 |
| Harnstoff, Gew.-Teile | 30 | 30 | 30 |
| Wasser, Gew.-Teile | 80 | 66 | 66 |
| Ammoniak, Gew.-Teile | – | – | 35,8 |
| pH-Wert bei Blattbildung | 7,0 | 6,9 | 8,4 |
| Tintenschwimmdauer | 15'' | 3' | 60'' |

Beispiel 10

Es wurde ein Hilfsmittel wie in Beispiel 4 hergestellt. 5 Gewichtsteile dieses Hilfsmittels wurden mit 95 Gewichtsteilen Wasser verdünnt. 5 Gewichtsteile einer 50%igen Lösung eines mit 10% Maleinsäureanhydrid verstärkten Kolophoniumharzes wurden ebenfalls mit 95 Gewichtsteilen Wasser verdünnt und sodann mit der verdünnten Lösung des Hilfsmittels vermischt.

Das so erhaltene Hydrophobierungsmittel wurde zur Oberflächenleimung von ungeleimtem Zellstoffpapier verwendet. Das Hydrophobierungsmittel wurde direkt in die Leimpresse gegeben. Die Leimwirkung entfaltete sich unmittelbar nach der Trocknung. Das oberflächengeleimte Papier hatte eine Tintenschwimmdauer von 6 Stunden.

Beispiel 11

Es wurde ein Hilfsmittel hergestellt, indem man 50 Gewichtsteile Maleinsäureanhydrid und 30 Gewichtsteile Harnstoff in 80 Gewichtsteilen Wasser erhitzte und die erhaltene Lösung mit 18 ml einer 45%igen Kalilauge versetzte.

5 Teile des vorstehenden Hilfsmittels wurden nach der Arbeitsweise von Beispiel 10 verdünnt und mit dem verdünnten verstärkten Kolophoniumharzleim vermischt.

Bei Verwendung des so erhaltenen Hydrophobierungsmittels zur Oberflächenleimung von ungeleimtem Zellstoffpapier nach der Arbeitsweise von Beispiel 10 wurde eine Tintenschwimmdauer von 4 Stunden für das geleimte Papier erzielt.

### Beispiel 12

Es wurde ein Hilfsmittel hergestellt, indem man 50 Gewichtsteile Maleinsäureanhydrid und 30 Gewichtsteile Harnstoff in 80 Gewichtsteilen Wasser erhitzte und die erhaltene Lösung mit 18,25 ml einer 45%igen Natronlauge versetzte.

5 Teile des vorstehenden Hilfsmittels wurden nach der Arbeitsweise von Beispiel 10 verdünnt und mit dem verdünnten verstärkten Kolophoniumharzleim vermischt.

Bei Verwendung des so erhaltenen Hydrophobierungsmittels zur Oberflächenleimung von ungeleimtem Zellstoffpapier nach der Arbeitsweise von Beispiel 10 wurde eine Tintenschwimmdauer von 4,2 Stunden für das geleimte Papier erzielt.

### Beispiel 13

50 Gewichtsteile eines mit 10% Maleinsäureanhydrid verstärkten Kolophoniumharzes wurden geschmolzen und bei 120 °C mit 50 Gewichtsteilen eines Hilfsmittels nach Beispiel 4 versetzt. Sodann wurden bei 100 °C 150 ml Wasser und 20 ml einer 45%igen Natronlauge zugesetzt. Nach dem Abkühlen wurde das Gemischt mit 5% Ethanol versetzt.

Das so erhaltene Hydrophobierungsmittel wurde auf einen Feststoffgehalt von 2% verdünnt und zur Oberflächenleimung von ungeleimtem Zellstoffpapier verwendet. Die Tintendurchschlagzeit betrug 5 Stunden.

### Beispiel 14

50 Gewichtsteile eines mit 10% Maleinsäureanhydrid verstärkten Kolophoniumharzes wurden geschmolzen und bei 120 °C mit 50 Gewichtsteilen eines Hilfsmittels nach Beispiel 11 versetzt. Sodann wurden bei 100 °C 100 ml Wasser und 22 ml einer 45%igen Kalilauge zugesetzt. Nach dem Abkühlen wurde das Gemisch mit 5% Ethanol versetzt.

Das so erhaltene Hydrophobierungsmittel wurde auf einen Feststoffgehalt von 2% verdünnt und zur Oberflächenleimung von ungeleimtem Zellstoffpapier verwendet. Die Tintendurchschlagzeit betrug 45 Minuten.

### Beispiel 15

50 Gewichtsteile eines mit 10% Maleinsäureanhydrid verstärkten Kolophoniumharzes wurden geschmolzen und bei 120 °C mit 50 Gewichtsteilen eines Hilfsmittels nach Beispiel 12 versetzt. Sodann wurden bei 100 °C 100 ml Wasser und 22 ml einer 45%igen Natronlauge zugesetzt. Nach dem Abkühlen wurde das Gemisch mit 5% Ethanol versetzt.

Das so erhaltene Hydrophobierungsmittel wurde auf einen Feststoffgehalt von 2% verdünnt und zur Oberflächenleimung von ungeleimtem Zellstoffpapier verwendet. Die Tintendurchschlagzeit betrug 8 Stunden.

### Beispiel 16

25 Gewichtsteile eines mit 10% Maleinsäureanhydrid verstärkten Kolophoniumharzes wurden bei 120 °C mit 50 Gewichtsteilen eines Hilfsmittels nach Beispiel 4 versetzt. Sodann wurden bei 100 °C 30 ml Wasser und 20 ml einer 45%igen Natronlauge zugesetzt.

Nach dem Abkühlen wurde das Gemisch mit 5% Ethanol versetzt.

Das so erhaltene Hydrophobierungsmittel wurde auf einen Feststoffgehalt von 2% verdünnt und zur Oberflächenleimung von ungeleimtem Zellstoffpapier verwendet. Die Tintendurchschlagzeit betrug 5 Stunden.

### Beispiel 17

100 Gewichtsteile eines mit 7% Fumarsäure verstärkten Kolophoniumharzes wurden geschmolzen und bei 120 °C mit 100 Gewichtsteilen eines Hilfsmittels nach Beispiel 11 versetzt. Sodann wurden bei 100 °C 100 Gewichtsteile Wasser und 65 Gewichtsteile einer 45%igen Kalilauge zugesetzt. Nach dem Abkühlen wurde das Gemisch mit 18 Gewichtsteilen Ethanol versetzt.

Das so erhaltene Hydrophobierungsmittel wurde auf einen Feststoffgehalt von 2% verdünnt und zur Oberflächenleimung von ungeleimtem Zellstoffpapier verwendet. Die Tintendurchschlagzeit betrug 15 Minuten.

### Patentansprüche

1. Hydrophobierungsmittel für cellulosehaltige Flächengebilde, enthaltend

(a) eine wässrige Dispersion oder Lösung mindestens eines mit einer carboxylgruppenhaltigen dienophilen Verbindung modifiziertem Kolophoniumharzes und/oder eines nicht modifizierten und/oder eines hydrierten und/oder eines disproportionierten Kolophoniumharzes,

(b) eine wässrige Lösung eines Hilfsmittels aus 10 bis 90 Gew.-% Maleinsäureanhydrid, Maleinsäure, Fumarsäure oder Acrylsäure und 90 bis 10 Gew.-% Harnstoff, bezogen auf Feststoffe, das mit einer Base neutralisiert sein kann, und

(c) gegebenenfalls übliche Streckmittel, Zuschlagstoffe, Stabilisatoren und/oder Fixiermittel,

wobei das Gewichtsverhältnis von Kolophoniumharz a) zu dem Hilfsmittel b) 1:1 bis 1:2 beträgt.

2. Hydrophobierungsmittel nach Anspruch 1, dadurch gekennzeichnet, dass es (a) eine wässrige Dispersion eines mit 8 bis 12 Gew.-% Maleinsäureanhydrid modifizierten Kolophoniumharzes und (b) eine wässrige Lösung eines Hilfsmittels aus Harnstoff und/oder Maleinsäureanhydrid enthält.

3. Hydrophobierungsmittel nach einem der Ansprüche 1 oder 2, dadurch gekennzeichnet, dass es ein Polyethylenimiderivat als kationisches Fixiermittel (c) enthält.

4. Hydrophobierungsmittel nach einem der Ansprüche 1 bis 3, dadurch gekennzeichnet, dass das Hilfsmittel (b) aus 50 Gew.-Teilen Maleinsäureanhydrid, 20 bis 50 Gew.-Teilen Harnstoff und 70 bis 100 Gew.-Teilen Wasser besteht und mit Natronlauge, Kalilauge, Ammoniak oder Triethanolamin neutralisiert sein kann.

5. Verfahren zur Herstellung des Hydrophobierungsmittels für cellulosehaltige Flächengebilde nach einem der Ansprüche 1 bis 4, dadurch gekennzeichnet, dass man die Bestandteile (a), (b) und gegebenenfalls (c) in konzentrierter oder verdünnter Form miteinander vermischt, und das erhaltene Gemisch gegebenenfalls weiter mit Wasser verdünnt.

6. Verwendung des Hydrophobierungsmittels nach einem der Ansprüche 1 bis 4 zur Hydrophobierung cellulosehaltiger Flächengebilde, insbesondere zur Masse- und Oberflächenleimung von Papier.

**Revendications**

1. Agent hydrofobe pour substrats cellulosiques plats contenant:

a) une dispersion ou une solution aqueuse d'au moins une résine de colophane modifiée avec un composé diénophile contenant un ou plusieurs groupes carboxyles et/ou d'une résine de colophane non modifiée et/ou d'une résine de colophane hydrogénée et/ou d'une résine de colophane ayant subi une dismutation,

b) une solution aqueuse d'un adjuvant pouvant être neutralisé avec une base, constitué de 10 à 90% en poids d'anhydride d'acide maléique, d'acide maléique, d'acide fumarique ou d'acide acrylique et 90 à 10% en poids d'urée, par rapport aux corps solides, et

c) éventuellement des diluants, additifs, stabilisateurs et/ou fixateurs usuels,

dans lequel le rapport pondéral de la résine de colophane

a) à l'adjuvant b) est de 1:1 à 1:2.

2. Agent hydrophobe selon la revendication 1, caractérisé par le fait qu'il contient (a) une dispersion aqueuse d'une résine de colophane modifiée avec 8 à 12% en poids d'anhydride d'acide maléique et (b) une solution aqueuse d'un adjuvant composé d'urée et/ou d'anhydride d'acide maléique.

3. Agent hydrophobe selon la revendication 1 ou 2, caractérisé par le fait qu'il contient un dérivé de polyéthylène comme fixateur cationique (c).

4. Agent hydrophobe selon l'une des revendications 1 à 3, caractérisé par le fait que l'adjuvant (b) est constitué de 50 unités pondérales d'anhydride d'acide maléique, de 20 à 50 unités pondérales d'urée et de 70 à 100 unités pondérales d'eau et qu'il peut être neutralisé avec de la soude caustique, de la potasse caustique, de l'ammoniaque ou du triéthanolamine.

5. Procédé pour la préparation de l'agent hydrophobe pour substrats cellulosiques plats selon l'une des revendications 1 à 4, caractérisé en ce que l'on mélange les composants (a), (b) et éventuellement (c) sous une forme concentrée ou diluée et que le mélange obtenu est éventuellement de nouveau dilué avec de l'eau.

6. Utilisation de l'agent hydrophobe selon l'une des revendications 1 à 4 pour l'imperméabilisation de substrats cellulosiques plats, en particulier pour l'encollage en masse et en surface du papier.

**Claims**

1. Hydrophobing agent for flat cellulosic substrates, containing

(a) an aqueous dispersion or solution of at least one colophonium resin modified by a dienophilic compound containing carboxyl groups and/or a non-modified and/or a hydrogenated and/or a disproportionated colophonium resin,

(b) an aqueous solution of an auxiliary agent of 10 to 90% by weight maleic anhydride, maleic acid, fumaric acid or acrylic acid and 90 to 10% by weight urea, calculated on the solid matter content, that may be neutralized with a base, and

(c) optionally customary fillers, additives, stabilizers and/or fixatives,

wherein the weight ratio of colophonium resin a) to the auxiliary agent b) is 1:1 to 1:2.

2. Hydrophobing agent according to claim 1, characterized in that it contains (a) an aqueous dispersion of a colophonium resin, modified by 8 to 12% by weight maleic anhydride, and (b) an aqueous solution of an auxiliary agent consisting of urea and/or maleic anhydride.

3. Hydrophobing agent according to one of claims 1 or 2, characterized in that it contains a polyethylene imine derivative as cationic fixative (c).

4. Hydrophobing agent according to one of claims 1 to 3, characterized in that the auxiliary agent (b) consists of 50 parts by weight of maleic anhydride, 20 to 50 parts by weight of urea and 70 to 100 parts by weight of water, and may be neutralized with sodium hydroxide, potassium hydroxide, ammonia or triethanolamine.

5. Process for the preparation of the hydrophobing agent for flat cellulosic substrates according to one of claims 1 to 4, characterized in that the ingredients (a), (b), and optionally (c), are mixed together in concentrated or diluted form, and optionally the obtained mixture is further diluted with water.

6. Use of the hydrophobing agent according to one of claims 1 to 4 for hydrophobing flat cellulosic substrates, particularly for the mass and surface sizing of paper.